# EUROPEAN PATENT APPLICATION

(11) **EP 4 560 367 A1**
(43) Date of publication of application: **28.05.2025**
(21) Application number: 23842827.0
(22) Date of filing: 05.07.2023
(51) Int. Cl.: G02B 5/23, B32B 27/30, G02B 1/10, G02C 7/00, G02C 7/10

(54) **LAYERED BODY, OPTICAL ARTICLE, LENS, AND SPECTACLES**

(30) Priority: 21.07.2022 JP 2022116137; 29.03.2023 JP 2023053170
(71) Applicant: TOKUYAMA CORPORATION, Yamaguchi 745-8648 (JP)
(72) Inventor: SHIMIZU Yasutomo, Shunan-shi, Yamaguchi 745-8648 (JP); MORI Katsuhiro, Shunan-shi, Yamaguchi 745-8648 (JP)
(74) Representative: Papula Oy
(86) International application number: PCT/JP2023/025033
(87) International publication number: WO 2024/018902

(57) **Abstract**

The purpose of the present invention is to provide: a layered body having excellent adhesion to an optical element base material and excellent shape stability; and an optical article, a lens, and spectacles that include such layered body. According to this embodiment, a layered body is provided. The layered body comprises: a first base material and a second base material; an adhesion layer; and a coating layer. The first and second base materials include a polyvinyl alcohol resin. The adhesion layer is interposed between the first base material and the second base material and adheres these base materials. The coating layer contains a resin and covers at least a portion of the surface of the first base material and/or the second base material. The resin contains at least one type selected from the group consisting of an epoxy resin, a urethane resin, and an acrylic resin.

## Description

### TECHNICAL FIELD

The present invention relates to a laminate, an optical component, a lens, and spectacles.

### BACKGROUND ART

Plastic spectacles include plastic lenses. For example, plastic lenses are manufactured by subjecting semi-finished lenses (semi-products) to various processing steps. The top convex surface of the semi-finished lens is provided with functional layers such as a hard coat layer and an antireflective coating layer. In addition, the bottom concave surface of the semi-finished lens is cut and polished.

In recent years, attention has been focused on photochromic lenses, which have photochromic properties that enable them to change their color depending on the amount of ultraviolet light they are exposed to. Photochromic lenses can be obtained by applying a photochromic compound onto plastic lenses. The photochromic compound can form two or more isomers that have different optical absorption spectra and reversibly change into one another under the effect of light.

Conventional methods for manufacturing a photochromic lens include a kneading method including dispersing a photochromic compound into a semi-finished lens matrix; and a layering method including forming a photochromic compound-containing layer on the surface of a semi-finished lens.

A binder sheet method is a method for manufacturing a semi-finished lens, which includes forming a binder sheet including two optical sheets and a photochromic compound-containing resin layer in between them; and integrating the binder sheet with a lens base material to form the semi-finished lens. For example, this method includes inserting the binder sheet into a die and performing thermoplastic resin injection molding on the binder sheet in the die to form the semi-finished lens. The binder sheet method can use an independent, photochromic compound-containing material to form the self-finished lens and thus tends to have high production efficiency and facilitate mass production as compared to the kneading method and the layering method.

### Citation List

### Patent Document

Patent Document 1: PCT International Publication No. WO2015/005391
Patent Document 2: PCT International Publication No. WO2019/163728
Patent Document 3: Japanese Unexamined Patent Application (Translation of PCT Application), Publication No. 2011-501235

### DISCLOSURE OF THE INVENTION

### Problems to be Solved by the Invention

It is an object of the present invention to provide a laminate having a high ability to bond to optical element base materials and having high shape stability and to provide an optical component, lens, and spectacles each including such a laminate.

### Means for Solving the Problems

The present disclosure relates to a laminate. The laminate includes first and second base materials, an adhesive layer, and a coat layer. The first and second base materials each include a polyvinyl alcohol resin or a cellulose resin. The adhesive layer is provided between the first and second base materials to bond them together. The coat layer includes a resin and covers at least a part of the surface of at least one of the first or second base material. The resin includes at least one selected from the group consisting of an epoxy resin, a urethane resin, and an acrylic resin.

The present disclosure also relates to an optical component. The optical component includes the laminate.

The present disclosure also relates to a lens. The lens includes the optical component.

The present disclosure also relates to spectacles. The spectacles include the lens.

### Effects of the Invention

The present invention provides a laminate having a high ability to bond to optical element base materials and having high shape stability and provides an optical component, lens, and spectacles each including such a laminate.

### BRIEF DESCRIPTION OF THE DRAWINGS

FIG. 1 is a schematic cross-sectional view of an example of a laminate according to an embodiment;
FIG. 2 is a schematic cross-sectional view of an example of an optical component according to the embodiment; and
FIG. 3 is a schematic perspective view of an example of spectacles according to an embodiment.

### PREFERRED MODE FOR CARRYING OUT THE INVENTION

In an embodiment, a laminate is provided. The laminate includes first and second base materials, an adhesive layer, and a coat layer. The first and second base materials each include a polyvinyl alcohol resin or a cellulose resin. The adhesive layer is provided between the first and second base materials to bond them together. The coat layer includes a resin and covers at least a part of the surface of at least one of the first or second base material. The resin includes at least one selected from the group consisting of an epoxy resin, a urethane resin, and an acrylic resin.

According to an embodiment, for example, the laminate may be used as a binder sheet to be integrated with an optical element base material, such as a lens base material. A binder sheet including first and second base materials each including a polyvinyl alcohol resin or a cellulose resin is, for example, integrated with a thermosetting resin by cast polymerization or the like. During such cast polymerization, the thermosetting resin composition has a temperature lower than that of the thermoplastic resin composition used during injection molding. In an optical component produced by such cast polymerization, therefore, the bonding strength between the binder sheet and the optical element base material may be lower than that between those in an optical component produced by injection molding. The laminate according to an embodiment has a coat layer on the surface of at least one of the first or second base material. The coat layer, which includes such a resin as an epoxy resin, a urethane resin, or an acrylic resin, has a higher ability to bond to the optical element base material than the first and second base materials.

In some cases, a binder sheet is subjected to, for example, shaping, such as curving to conform to the lens shape. A film of the polyvinyl alcohol resin is relatively sensitive to moisture in the air since the polyvinyl alcohol resin surface has a large number of hydroxyl groups. A binder sheet including a polyvinyl alcohol resin-based base material, therefore, tends to have low shape stability. The coat layer of the laminate according to an embodiment can interfere with the bonding of water molecules from the air to at least one of the first or second base material. Therefore, the laminate according to an embodiment has high shape stability as compared to the corresponding coat layer-free laminate.

Hereinafter, the laminate according to an embodiment will be described in detail.

### Laminate

As mentioned above, the laminate according to an embodiment may be used as a binder sheet. The laminate according to an embodiment may be used as a functional sheet when it contains a functional colorant, such as a photochromic compound, in the adhesive layer.

The laminate according to an embodiment preferably has a thickness of 100 µm or more, more preferably 150 µm or more, even more preferably 200 µm or more. The thicker the laminate, the higher its shape stability tends to be. In an example, the thickness of the laminate may have an upper limit of 1,000 µm or less, and in another example, it may have an upper limit of 500 µm or less, although it should have no upper limit.

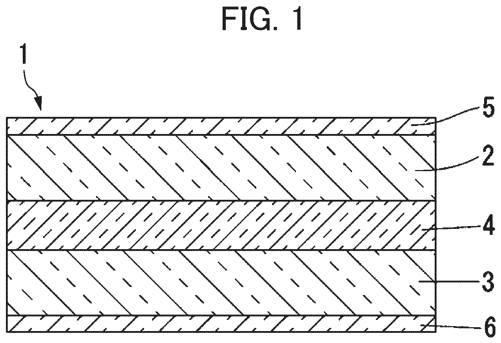

FIG. 1 is a schematic cross-sectional view of an example of the laminate. The laminate 1 shown in FIG. 1 includes a first base material 2, a second base material 3, an adhesive layer 4 provided between the first and second base materials 1 and 2, a first coat layer 5 covering the first base material 2, and a second coat layer 6 covering the second base material **3.** At least one of the first or second coat layer may cover a side surface of the laminate 1. In this case, the first and second coat layers may be linked to each other.

### First and Second Base Materials

The first and second base materials (hereinafter also referred to as the "base materials") each include a polyvinyl alcohol (PVA) resin or a cellulose resin. The base materials may each consist of a PVA resin or a cellulose resin or may each include an additional resin in addition to a PVA resin or a cellulose resin. Examples of the cellulose resin that may be used include acetylcellulose, such as triacetylcellulose or diacetylcellulose, and propylcellulose, such as tripropylcellulose or dipropylcellulose. Examples of the additional resin include aldehyde-modified polymers, such as polyvinyl formal, polyvinyl acetal, and polyvinyl butyral. In the present invention, the cellulose resin may be any type. Preferably, the cellulose resin has a luminous transmittance of 92.5% or more.

The base material may be any one of an unstretched, uniaxially stretched, or biaxially stretched base material. The unstretched base material, such as a film, may be stretched in any of a machine direction (MD), a transverse direction (TD) perpendicular to the machine direction, or a direction oblique to the machine direction. As used herein, the term "unstretched sheet (base material)" refers to a sheet (base material) remaining unstretched, and the term "uniaxially stretched sheet (base material)" refers to a product of stretching the unstretched sheet (base material) in any one of the directions mentioned above. The term "biaxially stretched sheet (base material)" refers to a sheet (base material) stretched in two of the directions mentioned above. The biaxially stretched sheet may be a simultaneously biaxially stretched sheet, which has undergone stretching in two directions simultaneously, or a sequentially biaxially stretched sheet, which has undergone stretching in one specific direction and then stretching in another specific direction. In general, the biaxially stretched sheet has preferably undergone stretching in MD and TD. The stretch ratio is preferably 1.5 to 8 times.

The PVA resin typically has an average degree of polymerization of 100 or more and 10,000 or less, preferably 1,500 or more and 8,000 or less, more preferably 2,000 or more and 5,000 or less. The average degree of polymerization of the PVA resin may be determined by a method according to the Japanese Industrial Standards (JIS) K6726 (1994). The PVA resin may contain boric acid. Boric acid may be used as a cross-linking agent for cross-linking PVA molecules. The PVA resin typically has a boric acid content of 1 mass% or more and 20 mass% or less, preferably 3 mass% or more and 18 mass% or less, more preferably 5 mass% or more and 15 mass% or less. The boric acid content can be determined using inductively coupled plasma (IPC) emission spectrometry. Specifically, the base material is first dissolved in an aqueous nitric acid solution to form a base material solution. The solution is subjected to the IPC analysis for the calculation of the boron content. The boron content is converted to the boric acid content.

The base material may be a polarizing film, which has polarizing properties. For use as a part of a binder sheet, at least one of the first or second base material may be a polarizing film. The base material with polarizing properties preferably has a luminous transmittance of 10% or more and 80% or less and a degree of polarization of 30% or more and 99.9% or less.

The base material with polarizing properties contains a dichromatic substance. The dichromatic substance includes iodine and a dichromatic dye. The dichromatic dye may be an azo dye or an anthraquinone dye. Examples of the dichromatic dye include Chloranthine Fast Red (C.I. 28160), Congo Red (C.I. 22120), Brilliant Blue B (C.I. 24410), Benzopurpurin (C.I. 23500), Chlorazol Black BH (C.I. 22590), Direct Blue 2B (C.I. 22610), Diamine Green (C.I. 30295), Chrysophenine (C.I. 24895), Sirius Yellow (C.I. 29000), Direct Fast Red (C.I. 23630), Acid Black (C.I. 20470), Direct Sky Blue (C.I. 24400), Solophenyl Blue 4GL (C.I. 34200), Direct Copper Blue 2B (C.I. 24185), and Nippon Brilliant Violet BKconc (C.I. 27885).

The base material typically has a thickness of 10 µm or more and 100 µm or less. The first and second base materials may have the same or different thicknesses.

### Adhesive Layer

The adhesive layer may include at least one selected from the group consisting of a polyurethane resin, a poly(urethane-urea) resin, a polythiourethane resin, and a poly (thiourethane-urea) resin. The adhesive layer may contain a functional colorant, such as a photochromic compound. The adhesive layer may contain a cured adhesive composition as described below.

The adhesive layer typically has a thickness of 0.1 µm or more and 100 µm or less. The thickness of the adhesive layer may be smaller or greater than that of the first or second base material.

### Adhesive Composition

The adhesive composition includes a functional colorant and a polymerizable component. The polymerizable component will form the matrix of the adhesive layer. The polymerizable component includes a second prepolymer or includes a first polymer and a second prepolymer or a third prepolymer. In other words, the adhesive composition may include a first combination of a functional colorant and a polymerizable component including a second prepolymer; a second combination of a functional colorant and a polymerizable component including a first polymer and a second prepolymer; a third combination of a functional colorant and a polymerizable component including a first polymer and a third prepolymer; or a fourth combination of a functional colorant and a polymerizable component including a first polymer, a second prepolymer, and a third prepolymer.

### Functional Colorant

The functional colorant includes, for example, at least one selected from the group consisting of a photochromic compound, an ultraviolet absorber, a blue light absorber, an infrared absorber, and an electrochromic compound.

The photochromic compound is, for example, at least one selected from the group consisting of a chromene compound, a fulgide compound, and a spirooxazine compound. The photochromic compound is preferably a chromene compound. Chromene compounds include 1-benzopyran skeleton-containing compounds, spiropyran compounds, which have a spiropyran skeleton, and naphthopyran compounds, which have a naphthopyran skeleton. Naphthopyran compounds include indenonaphthopyran compounds, which have an indenonaphthopyran skeleton. The chromene compound preferably includes an indenonaphthopyran compound having an indeno[2,1-f]naphtho[1,2-b]pyran skeleton. Cured materials including a cured, indeno[2,1-f]naphtho[1,2-b]pyran skeleton-containing, chromene compound tend to have high durability.

The indenonaphthopyran compound preferably includes a compound represented by Formula (IIIa) below.

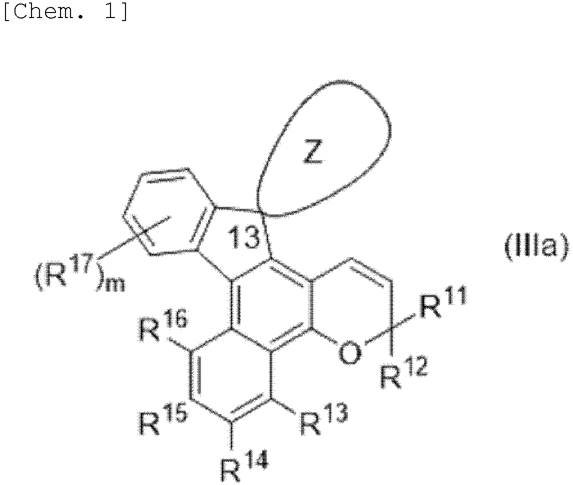

In Formula (IIIa), the Z ring is a substituted or unsubstituted spiro ring having a spiro carbon atom at position 13. The Z ring may form, with the carbon atom at position 13, an aliphatic ring, a fused polycyclic ring, a heterocyclic ring, or a heterocyclic aromatic ring. The Z ring is preferably an aliphatic ring having 5 to 16 ring-member carbon atoms. The aliphatic ring more preferably has an alkyl substituent having 1 to 3 carbon atoms.

In Formula (IIIa), R¹¹, R¹², R¹³, R¹⁴, R¹⁵, R¹⁶, and R¹⁷ are each independently a hydrogen atom, a hydroxyl group, a methoxycarbonyl group, an ethoxycarbonyl group, an alkyl group, a cycloalkyl group, a haloalkyl group, an alkoxy group , an amino group, a substituted amino group, an optionally substituted heterocyclic group, a halogen atom, an alkylthio group, an optionally substituted arylthio group, a nitro group, a formyl group, a hydroxycarbonyl group, an alkylcarbonyl group, an alkoxycarbonyl group, an optionally substituted aralkyl group, an optionally substituted aralkoxy group, an optionally substituted aryloxy group, an optionally substituted aryl group, an optionally substituted heteroaryl group, a thiol group, an alkoxyalkylthio group, a haloalkylthio group, an optionally substituted cycloalkylthio group, or an oligomer group; m is an integer of 0 or more and 4 or less; and when m is 2 or more and 4 or less, the multiple R¹⁷ groups may have the same or different structures.

The alkyl group preferably has 1 to 10 carbon atoms. Examples of the alkyl group include methyl, ethyl, n-propyl, isopropyl, n-butyl, sec-butyl, tert-butyl, pentyl, and hexyl.

The haloalkyl group preferably has 1 to 10 carbon atoms. The haloalkyl group is preferably a fluoro-, chloro-, or bromo-substituted alkyl group. Preferred examples of the haloalkyl group include trifluoromethyl, tetrafluoroethyl, chloromethyl, 2-chloroethyl, and bromomethyl.

The cycloalkyl group preferably has 3 to 8 ring-member carbon atoms. Examples of the cycloalkyl group include cyclopropyl, cyclobutyl, cyclopentyl, and cyclohexyl. In this regard, the cycloalkyl group may have a substituent, and carbon atoms in the substituent are not counted in the number of carbon atoms (3 to 8 carbon atoms) in the cycloalkyl group.

The alkoxy group preferably has 1 to 10 carbon atoms, more preferably 1 to 6 carbon atoms. Preferred examples of the alkoxy group include methoxy, ethoxy, n-propoxy, isopropoxy, n-butoxy, sec-butoxy, and tert-butoxy.

The amino group is a primary amino group (-NH₂). The substituted amino group is a secondary or tertiary amino group in which one or two hydrogen atoms have been replaced by one or two substituents. Examples of the substituent possessed by the substituted amino group include an alkyl group having 1 to 6 carbon atoms, a haloalkyl group having 1 to 6 carbon atoms, an alkoxy group having 1 to 6 carbon atoms, a cycloalkyl group having 3 to 7 carbon atoms, an aryl group having 6 to 14 carbon atoms, and a heteroaryl group having 4 to 14 carbon atoms. Preferred examples of the amino group include amino, methylamino, dimethylamino, ethylamino, diethylamino, phenylamino, and diphenylamino.

The heterocyclic group preferably has 3 to 10 atoms. The heterocyclic group may be an aliphatic heterocyclic group or an aromatic heterocyclic group. Examples of the aliphatic heterocyclic group include morpholino, piperidino, pyrrolidinyl, piperazino, and N-methylpiperazino. Examples of the aromatic heterocyclic group include indolinyl. The heterocyclic group may have a substituent. Such a substituent is preferably an alkyl group having 1 to 10 carbon atoms. Preferred examples of the substituted heterocyclic group include 2,6-dimethylmorpholino, 2,6-dimethylpiperidino, and 2,2,6,6-tetramethylpiperidino.

Examples of the halogen atom include fluorine, chlorine, bromine, and iodine.

The alkylthio group preferably has 1 to 10 carbon atoms. Examples of the alkylthio group include methylthio, ethylthio, n-propylthio, isopropylthio, n-butylthio, sec-butylthio, and tert-butylthio.

The arylthio group preferably has 6 to 10 carbon atoms. Examples of the arylthio group include phenylthio, 1-naphthylthio, and 2-naphthylthio.

The alkylcarbonyl group preferably has 2 to 10 carbon atoms. Examples of the alkylcarbonyl group include acetyl and ethylcarbonyl.

The alkoxycarbonyl group preferably has 2 to 10 carbon atoms. Examples of the alkoxycarbonyl group include methoxycarbonyl and ethoxycarbonyl.

The aralkyl group preferably has 7 to 11 carbon atoms. Examples of the aralkyl group include benzyl, phenylethyl, phenylpropyl, phenylbutyl, and naphthylmethyl.

The aralkoxy group preferably has 7 to 11 carbon atoms. Examples of the aralkoxy group include benzyloxy and naphthylmethoxy.

The aryl group preferably has 6 to 12 carbon atoms. Examples of the aryl group include phenyl, 1-naphthyl, and 2-naphthyl.

The aryloxy group preferably has 6 to 12 carbon atoms. Examples of the aryloxy group include phenyloxy and naphthyloxy.

The heteroaryl group preferably has 3 to 12 carbon atoms. Examples of the heteroaryl group include thienyl, furyl, pyrrolinyl, pyridyl, benzothienyl, benzofuranyl, and benzopyrrolinyl.

The alkoxyalkylthio group preferably has 2 to 10 carbon atoms. Examples of the alkoxyalkylthio group include methoxymethylthio, methoxyethylthio, methoxy-n-propylthio, methoxy-n-butylthio, ethoxyethylthio, and n-propoxypropylthio.

The haloalkylthio group preferably has 1 to 10 carbon atoms. Examples of the haloalkylthio group include trifluoromethylthio, tetrafluoroethylthio, chloromethylthio, 2-chloroethylthio, and bromomethylthio.

The cycloalkylthio group preferably has 3 to 8 carbon atoms. Examples of the cycloalkylthio group include cyclopropylthio, cyclobutylthio, cyclopentylthio, and cyclohexylthio. In this regard, the cycloalkylthio group may have a substituent, and carbons in the substituent are not counted in the number of carbons (3 to 8 carbons) in the cycloalkylthio group.

The oligomer group includes an oligomer chain, a linking group, and an end group. The oligomer chain may include at least one selected from the group consisting of a polyalkylene oxide chain, a polysiloxane chain, and a polyester chain. The oligomer chain is a divalent group.

The polyalkylene oxide chain includes linear or branched alkylene oxide repeating units each having 1 to 10 carbon atoms. The number of repeating units in polyalkylene oxide chain is, for example, 3 or more and 1,000 or less. The repeating unit is, for example, -CH₂O-, -CH₂CH₂O-, - CH(CH₃)CH₂O-, -CH₂CH(CH₃)O-, -CH₂CH₂CH₂O-, or -CH₂CH₂C(CH₃)O-.

The polysiloxane chain includes, for example, dimethylsilyleneoxy (-Si(CH₃)₂O-) repeating units. The number of repeating units in the polysiloxane chain is, for example, 3 or more and 1,000 or less.

The polyester chain includes, for example, -OC(=O)CH₂-, - OC(=O)CH₂CH₂CH₂CH₂CO(=O)O-, or -OC(=O) CH₂CH₂CH₂CH₂CO(=O)OCCH₂CH₂-repeating units. The number of repeating units in the polyester chain is, for example, 3 or more and 1,000 or less.

The linking group links the photochromic compound to one end of the oligomer chain. The linking group is, for example, -O-, -O-CH₂CH₂-O-, -O-CH₂CH₂-OC(=O)CH₂CH₂C(=O)-O-, or -O-CH₂CH₂-OC(=O)CH₂CH₂C(=O)-O-CH₂-. The linking group may be a divalent or multivalent group.

The end group is bonded to the other end of the oligomer chain. The end group is, for example, a linear or branched alkyl group having 1 to 10 carbon atoms, a linear or branched alkoxy group having 1 to 10 carbon atoms, or a linear or branched alkenyl group having 2 to 30 carbon atoms. The end group is preferably a methyl group.

The oligomer group may include a first linking group, an oligomer chain, and a second linking group. The first and second linking groups may have the same or different structures. The first linking group is linked to a first photochromic compound. The second linking group is linked to a second photochromic compound. The first and second photochromic compounds may have the same or different structures.

The cycloalkyl group, the arylthio group, the aralkyl group, the aralkoxy group, the aryloxy group, the aryl group, the heteroaryl group, and the cycloalkylthio group may each be substituted or unsubstituted.

The cycloalkyl group, the arylthio group, the aralkyl group, the aralkoxy group, the aryloxy group, the aryl group, the heteroaryl group, and the cycloalkylthio group may have a substituent selected from the group consisting of a primary amino group, a secondary amino group, a tertiary amino group, an alkyl group having 1 to 10 carbon atoms, a haloalkyl group having 1 to 10 carbon atoms, an alkoxy group having 1 to 10 carbon atoms, a haloalkoxy group having 1 to 10 carbon atoms, an alkylthio group having 1 to 10 carbon atoms, a hydroxyl group, a cycloalkyl group having 3 to 8 carbon atoms, an aryl group having 6 to 12 carbon atoms, an alkylaryl group having 1 to 20 carbon atoms, a heterocycloalkyl group having 1 to 8 carbon atoms and 1 to 5 heteroatoms, a heteroaryl group having 1 to 8 carbon atoms and 1 to 5 heteroatoms, an aryloxy group having 6 to 12 carbon atoms, an arylthio group having 6 to 12 carbon atoms, a cyano group, a nitro group, and a halogen atom. The number of substituents may be one or two or more.

R¹³ and R¹⁴, R¹⁴ and R¹⁵, or R¹⁵ and R¹⁶ may be bonded to each other to form an aliphatic ring having 2 to 5 carbon atoms, an aliphatic heterocyclic ring having 1 to 4 carbon atoms and 1 to 3 heteroatoms, an aromatic ring having 4 to 12 carbon atoms, or an aromatic heterocyclic ring having 3 to 11 carbon atoms and 1 to 6 heteroatoms. The aliphatic ring, the aliphatic heterocyclic ring, the aromatic ring, and the aromatic heterocyclic ring may be unsubstituted or may have at least one substituent selected from the above substituent group.

The ultraviolet absorber has an absorption wavelength in the ultraviolet (UV) range of 400 nm or less. The ultraviolet absorber may have a maximum absorption wavelength in the range of 330 nm or more and 380 nm or less, or a maximum absorption wavelength in the range of 250 nm or more and less than 330 nm. The ultraviolet absorber may be an organic compound. The ultraviolet absorber is, for example, at least one selected from the group consisting of a benzophenone derivative, ethylhexyl methoxycinnamate, a benzotriazole derivative, and a triazine derivative. The ultraviolet absorber preferably includes at least one compound selected from the group consisting of a benzophenone derivative, ethylhexyl methoxycinnamate, and a benzotriazole derivative.

The blue light absorber may be a compound having an absorption spectrum with an absorption peak in the wavelength range of more than 400 nm and 450 nm or less. Such a compound is, for example, at least one selected from the group consisting of a perylene compound, a porphyrin compound, a carotenoid compound, and a cyanine compound. The blue light absorber is preferably a porphyrin compound, more preferably a tetraazaporphyrin compound.

The high-energy visible light absorber is a blue light absorber that has an absorption peak in the wavelength range of 400 nm or more and 420 nm or less. The high-energy visible light absorber may be a compound similar to the blue light absorber.

The dye preferably includes a compound having an absorption spectrum with an absorption peak in the wavelength range of 540 nm or more and 650 nm or less, and more preferably includes a compound having an absorption spectrum with an absorption peak in the wavelength region of 550 nm or more and 600 nm or less. The optical component containing such a compound can have high anti-glare properties. Examples of such a compound include nitro compounds, azo compounds, anthraquinone compounds, threne compounds, porphyrin compounds, and rare earth metal compounds. Such a compound is preferably at least one selected from the group consisting of a tetraazaporphyrin compound and a neodymium compound.

Examples of the electrochromic compound include organic materials such as viologen, polymers having electrochromic properties, and metal salt complexes having a d atom.

The content of the functional colorant in the solids of the adhesive composition is typically 0.1 mass% or more and 10 mass% or less, preferably 1 mass% or more and 5 mass% or less.

### Second Prepolymer

The second prepolymer is a product obtained by reacting a first prepolymer with a second polyfunctional active hydrogen compound, which is a chain extender, in which the first prepolymer is a product obtained by reacting a first polyfunctional active hydrogen compound with a first iso(thio)cyanate compound. The second prepolymer has two or more iso(thio)cyanate groups. The second prepolymer preferably has iso(thio)cyanate groups at both ends of its main chain. The second prepolymer includes at least one selected from the group consisting of a urethane prepolymer, a urea prepolymer, a urethane-urea prepolymer, a thiourethane prepolymer, a thiourea prepolymer, and a thiourethane-urea prepolymer. The second prepolymer can chemically bond with water in the atmosphere and with hydroxyl groups on the surfaces of the first and second base materials to form at least one selected from the group consisting of a (thio)urethane resin, a (thio)urea resin, and a (thio)urethane-urea resin.

The second prepolymer preferably has a number-average molecular weight of 5,000 or more, more preferably 10,000 or more, even more preferably 13,000 or more. When produced using the second prepolymer with a high number-average molecular weight, the laminate will tend to have a high peel strength. This may be because the second prepolymer molecules with a high number-average molecular wight can easily entangle with one another and thus have a high cohesive force and thus can provide a high adhesive force.

The second prepolymer preferably has a number-average molecular weight of 50,000 or less, more preferably 40,000 or less, even more preferably 30,000 or less. With an excessively high number-average molecular weight, the second prepolymer may tend to form a laminate with a low peel strength. In other words, the second prepolymer with an excessively high number-average molecular weight tends to have a low iso(thio)cyanate group content per unit mass and thus to provide a low adhesive force.

The number-average molecular weight of the second prepolymer can be measured using gel permeation chromatography (GPC). The measurement may be performed under the conditions: two Shodex KD-806M colums (manufactured by Showa Denko K.K.) connected in series; an eluent of a LiBr (10 mmol/L)/DMF solution; a flow rate of 1 mL/min; an RI detector; and a 1.0% dimethylformamide (DMF) solution of the second prepolymer sample. The analysis software may be Empower Personal GPC Option, which is GPC analysis software manufactured by Nihon Waters K.K.

The second prepolymer preferably has a softening point 90°C or more, more preferably 100°C or more, even more preferably 110°C or more. With a high softening point, the second prepolymer will tend to form a laminate with high heat resistance and higher bonding ability. In an example, the softening point of the second prepolymer has an upper limit of 200°C or less, and in another example, it has an upper limit of 160°C or less, although it should have no upper limit.

The softening point of the second prepolymer is measured, for example, by the method described below. First, the second prepolymer is dissolved in an organic solvent to form a solution. The concentration of the second prepolymer in the solution is, for example, 34 mass%. The solution is poured into a stainless steel vessel and dried at 40°C for 10 hours, at 60°C for 10 hours, and in a vacuum dryer at 60°C for 12 hours to form a 1 mm-thick test piece. The resulting test piece is subjected to analysis using a thermal mechanical analyzer (TMA 120C manufactured by Seiko Instruments Inc.) to determine its softening point. The measurement is performed using a needle probe with a tip diameter of 0.5 mm under the conditions of a rate of temperature rise of 10°C/min and the measurement temperature range of 30 to 200°C.

The second prepolymer may make up the main component of the solids in the adhesive composition. The content of the second prepolymer in the solids of the adhesive composition is, for example, 90 mass% or more and 99 mass% or less. In a case where the adhesive composition includes a second or fourth combination of: a polymerizable component including the first polymer and the second prepolymer; and a photochromic compound, the content of the second prepolymer in the solids of the adhesive composition is typically 5 mass% or more and 50 mass% or less, preferably 10 mass% or more and 40 mass% or less.

### First Prepolymer

The first prepolymer is a product obtained by reacting a first polyfunctional active hydrogen compound with a first iso(thio)cyanate compound. The first prepolymer has two or more iso(thio)cyanate groups. The first prepolymer preferably has iso(thio)cyanate groups at both ends of its main chain. The first prepolymer includes at least one selected from the group consisting of a urethane prepolymer, a urea prepolymer, a thiourethane prepolymer, and a thiourea prepolymer. The first prepolymer is a raw material for the second prepolymer.

The first prepolymer preferably has a number-average molecular weight of 500 or more and 10,000 or less, more preferably 1,000 or more and 5,000 or less. The number-average molecular weight of the first prepolymer can be measured by the same method as that for the second prepolymer.

### First Iso(thio)cyanate Compound

The first iso(thio)cyanate compound has two or more iso(thio)cyanate groups. The first iso(thio)cyanate compound preferably has two iso(thio)cyanate groups. The first iso(thio)cyanate compound is more preferably a diisocyanate compound having two isocyanate groups.

The first iso(thio)cyanate compound preferably has a molar mass of 100 or more and 500 or less. With a molar mass in such a range, the first iso(thio)cyanate compound will tend to form the second prepolymer or the first polymer with a desired number-average molecular weight. The first iso(thio)cyanate compound more preferably has a molar mass of 150 or more and 300 or less.

The first iso(thio)cyanate compound includes at least one selected from the group consisting of an aliphatic iso(thio)cyanate compound, an alicyclic iso(thio)cyanate compound, and an aromatic iso(thio)cyanate compound. The first iso(thio)cyanate compound is preferably an alicyclic iso(thio)cyanate compound. A single first iso(thio)cyanate compound or a mixture of two or more first iso(thio)cyanate compounds may be used.

Examples of the aliphatic isocyanate compound include pentamethylene diisocyanate, hexamethylene diisocyanate, heptamethylene diisocyanate, octamethylene isocyanate, 2,4,4,-trimethylhexamethylene diisocyanate, and 1,2-bis(2-isocyanatoethylthio) ethane.

Examples of the alicyclic isocyanate compound include isophorone diisocyanate, 1,3-bis(isocyanatomethyl)cyclohexane, 1,4-bis(isocyanatomethyl)cyclohexane, dicyclohexylmethane-4,4'-diisocyanate (hydrogenated diphenylmethane diisocyanate), norbornane diisocyanate, 2,5-bis(isocyanatomethyl)-bicyclo[2,2,1]-heptane, and 2,6-bis(isocyanatomethyl)-bicyclo[2,2,1]-heptane.

Examples of the aromatic isocyanate compound include xylene diisocyanate (o-, m-, p-), toluene-2,4-diisocyanate, toluene-2,6-diisocyanate, 1,3-bis(isocyanatomethyl)cyclohexane, 1,4-bis(isocyanatomethyl)cyclohexane, and 4,4'-diphenylmethane diisocyanate.

Examples of the aliphatic isothiocyanate compound include hexamethylene diisothiocyanate, 1,2-diisothiocyanatoethane, 1,3-diisothiocyanatopropane, 1,4-diisothiocyanatobutane, 1,6-diisothiocyanatohexane, 2,4,4-trimethylhexamethylene diisothiocyanate, thiobis(3-isothiocyanatopropane), thiobis(2-isothiocyanatoethane), and dithiobis(2-isothiocyanatoethane).

Examples of the alicyclic isothiocyanate compound include isophorone diisothiocyanate, cyclohexane diisothiocyanate, 2,4-bis(isothiocyanatomethyl)norbornane, 2,5-bis(isothiocyanatomethyl)norbornane, 2,6-bis(isothiocyanatomethyl)norbornane, 3,5-bis(isothiocyanatomethyl)norbornane, and norbornane diisothiocyanate.

Examples of the aromatic isothiocyanate compound include p-phenylenediisopropylidene diisothiocyanate, 1,2-diisothiocyanatobenzene, 1,3-diisothiocyanatobenzene, 1,4-diisothiocyanatobenzene, 2,4-diisothiocyanatotoluene, xylene diisothiocyanate (o-, m-, p-), 2,4-tolylene diisothiocyanate, 2,6-tolylene diisothiocyanate, 1,1'-methylenebis(4-isothiocyanatobenzene), 1,1'-methylenebis(4-isothiocyanato-2-methylbenzene), and 1,1'-methylenebis(4-isothiocyanato-3-methylbenzene).

### First Polyfunctional Active Hydrogen Compound

The first polyfunctional active hydrogen compound has two or more active hydrogen groups. The first polyfunctional active hydrogen compound preferably has two active hydrogen groups. The active hydrogen group includes at least one selected from the group consisting of a hydroxyl group, an amino group, a carboxy group, and a thiol group. The first polyfunctional active hydrogen compound includes at least one selected from the group consisting of a polyol compound having two or more hydroxyl groups, a polyamine compound having two or more amino groups, a dicarboxylic acid having two carboxy groups, and a polythiol compound having two or more thiol groups. A single first polyfunctional active hydrogen compound or a mixture of two or more first polyfunctional active hydrogen compounds may be used.

The first polyfunctional active hydrogen compound preferably includes a polyol compound. Such a polyol compound can form a (thio)urethane bond-containing first prepolymer. The repeating structural moiety of the polyol compound can contribute to forming an adhesive layer having a matrix that is less likely to hinder the photochromic compound from changing its structure. The polyol compound will tend to form a laminate having high photochromic performance.

The polyol compound preferably has a number-average molecular weight of 500 or more and 3,000 or less. With a number-average molecular weight in such a range, the polyol compound will tend to form the second prepolymer or the first polymer with a desired number-average molecular weight. The polyol compound more preferably has a number-average molecular weight of 800 or more and 2,000 or less.

The polyol compound may include at least one selected from the group consisting of a polyether polyol, a polyester polyol, a polycarbonate polyol, and a polycaprolactone polyol. The polyol compound preferably includes a polycarbonate polyol. The polycarbonate polyol will tend to form a laminate with a high bonding ability.

The polycarbonate polyol can be obtained, for example, by mono-phosgenation of a low molecular weight polyol or by transesterification of ethylene carbonate, diethyl carbonate, and diphenyl carbonate. Examples of the low molecular weight polyol include ethylene glycol, 1,2-propanediol, 1,3-propanediol, 2-methyl-1,3-propanediol, 1,2-butanediol, 1,3-butanediol, 1,4-butanediol, 1,5-pentanediol, 1,6-hexanediol, 1,8-octanediol, 1,9-nonanediol, 1,10-decanediol, 3-methyl-1,5-pentanediol, 2-ethyl-4-butyl-1,3-propanediol, diethylene glycol, dipropylene glycol, neopentyl glycol, cyclohexane-1,4-diol, cyclohexane-1,4-dimethanol, dimer acid diol, ethylene oxide or propylene oxide adducts of bisphenol A, bis(β-hydroxyethyl)benzene, xylylene glycol, glycerin, trimethylolpropane, and pentaerythritol.

Examples of the polycarbonate polyol that may be used include Duranol^{®} series manufactured by Asahi Kasei Corporation, Kuraray Polyol^{®} series manufactured by Kuraray Co., Ltd., Placcel^{®} series manufactured by Daicel Corporation, Nippolan^{®} series manufactured by Tosoh Corporation, and ETERNACOLL^{®} series manufactured by UBE Corporation.

The polycaprolactone polyol is obtained, for example, by ring-opening polymerization of ε-caprolactone. Examples of the polycaprolactone polyol that may be used include Placcel^{®} series manufactured by Daicel Corporation.

The polyether polyol is obtained, for example, by the reaction of alkylene oxide with a compound having two or more active hydrogen groups in the molecule. Examples of the compound having two or more active hydrogen groups include water, ethylene glycol, propylene glycol, butanediol, glycerin, trimethylolpropane, hexanetriol, triethanolamine, diglycerin, pentaerythritol, trimethylolpropane, and hexanetriol. Examples of the alkylene oxide include cyclic ether compounds such as ethylene oxide, propylene oxide, and tetrahydrofuran.

Examples of the polyether polyol include Excenol^{®} series and Emulstar^{®} series manufactured by AGC Inc. and ADEKA POLYETHER series manufactured by ADEKA Corporation.

The polyester polyol is obtained, for example, by the condensation reaction of a polyhydric alcohol with a polybasic acid. Examples of the polyhydric alcohol includes ethylene glycol, 1,2-propanediol, 1,3-butanediol, 1,4-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, glycerin, and trimethylolpropane. Examples of the polybasic acid include succinic acid, adipic acid, azelaic acid, sebacic acid, dodecanedicarboxylic acid, cyclopentanedicarboxylic acid, cyclohexanedicarboxylic acid, orthophthalic acid, isophthalic acid, terephthalic acid, and naphthalenedicarboxylic acid.

Examples of the polyester polyol that may be used include POLYLITE^{®} series manufactured by DIC Corporation, Nippolan^{®} series manufactured by Tosoh Corporation, and MAXIMOL^{®} series manufactured by Air Water Performance Chemical Inc.

The polythiol compound may include at least one selected from the group consisting of an aliphatic polythiol, an aromatic polythiol, and a polythiol having a sulfur atom in addition to that in the mercapto group.

Examples of the aliphatic polythiol include methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, and 2,2-bis(mercaptomethyl)-1,3-propanedithiol.

Examples of the aromatic polythiol include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3- bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, and 1,2,3,4-tetrakis(mercaptomethyl)benzene.

Examples of the polythiol having a sulfur atom in addition to that in the mercapto group include bis(mercaptomethyl) sulfide, bis(mercaptoethyl) sulfide, bis(mercaptopropyl) sulfide, bis(mercaptomethylthio)methane, bis(2-mercaptoethylthio)methane, bis(3-mercaptopropylthio)methane, 1,2-bis(2-mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio) propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, and 1,2,3-tris(2-mercaptoethylthio) propane.

The amount of the first polyfunctional active hydrogen compound is preferably adjusted so that the ratio M11/M12 is 0.30 or more and 0.90 or less, in which M11 is the molar amount of the active hydrogen group in the first polyfunctional active hydrogen compound, and M12 is the molar amount of the iso(thio)cyanate group in the first iso(thio)cyanate compound. When the ratio M11/M12 is within the above range, the first prepolymer can have a sufficient amount of at least one of the urethane bond or the urea bond and can form a soft adhesive layer that is less likely to hinder the photochromic compound from changing its structure. The ratio M11/M12 is preferably 0.40 or more and 0.850 or less, more preferably 0.50 or more and 0.80 or less.

The ratio S1/S2 of the mass S1 of the first polyfunctional active hydrogen compound to the mass S2 of the first iso(thio)cyanate compound is preferably 0.1 or more and 10 or less. When the ratio S1/S2 is within the above range, the resulting second prepolymer can have a sufficient amount of isocyanate groups per unit mass. The ratio S1/S2 is preferably 0.8 or more and 5 or less, more preferably 1 or more and 4 or less.

### Second Polyfunctional Active Hydrogen Compound

The second polyfunctional active hydrogen compound has two or more active hydrogen groups. The second polyfunctional active hydrogen compound reacts with the first prepolymer to form the second prepolymer. The second polyfunctional active hydrogen compound functions as a chain extender to link the first prepolymer molecules. The second polyfunctional active hydrogen compound preferably has two active hydrogen groups. The second polyfunctional active hydrogen compound may be any one of the compounds listed for the first polyfunctional active hydrogen compound.

The second polyfunctional active hydrogen compound preferably includes a polyamine. The polyamine can form a (thio)urethan urea bond-containing second prepolymer. Such a second prepolymer will tend to form a laminate with a high bonding ability. The polyamine preferably has a molar mass of 50 or more and 500 or less. With a molar mass in such a range, the polyamine will tend to form the second prepolymer with a desired number-average molecular weight. The polyamine more preferably has a molar mass of 50 or more and 300 or less. The polyamine includes a diamine or a triamine and preferably includes a diamine.

Examples of the polyamine include isophorone diamine, ethylene diamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl) piperazine, bis-(4-aminocyclohexyl)methane, bis-(4-amino-3-butylcyclohexyl)methane, 1,2-, 1,3-, or 1,4-diaminocyclohexane, norbornane diamine, hydrazine, adipic acid dihydrazide, phenylenediamine, 4,4'-diphenylmethanediamine, N,N'-diethylethylenediamine, N,N'-dimethylethylenediamine, N,N'-dipropylethylenediamine, N,N'-dibutylethylenediamine, N-methylethylenediamine, N-ethylethylenediamine, bis(hexamethylene)triamine, and 1,2,5-pentanetriamine.

The polyamine preferably includes at least one selected from the group consisting of isophorone diamine, ethylenediamine, bis-(4-aminocyclohexyl)methane, and 1,6-diaminohexane.

The amount of the second polyfunctional active hydrogen compound is preferably adjusted so that the ratio M13/M14 is 0.21 or more and 0.9 or less, in which M13 is the molar amount of the active hydrogen group in the second polyfunctional active hydrogen compound, and M14 is the molar amount of the iso(thio)cyanate group in the first prepolymer. When the ratio M13/M14 is within the above range, the second prepolymer can be produced in a sufficient amount.

The ratio S3/S4 of the mass S3 of the second polyfunctional active hydrogen compound to the mass S4 of the first prepolymer is preferably 0.01 or more and 0.5 or less. When the ratio S3/S4 is within the above range, the resulting second prepolymer can have a sufficient amount of isocyanate groups per unit mass. The ratio S3/S4 is more preferably 0.05 or more and 0.3 or less.

### First Polymer

The first polymer is obtained by reacting the second prepolymer with a monofunctional active hydrogen compound having one active hydrogen group. The first polymer typically has no iso(thio)cyanate group. The first polymer is modified with a non-reactive functional group at its end. The first polymer includes at least one selected from the group consisting of a urethane polymer, a urea polymer, a urethane-urea polymer, a thiourethane polymer, a thiourea polymer, and a thiourethane-urea polymer.

The first polymer can chemically bond with the second prepolymer and/or a third prepolymer and with hydroxyl groups on the surfaces of the first and second base materials at high temperature to form at least one selected from the group consisting of a (thio)urethane resin, a (thio)urea resin, and a (thio)urethane-urea resin.

The first polymer preferably has a number-average molecular weight of 5,000 or more, more preferably 10,000 or more, even more preferably 13,000 or more. With a high number-average molecular weight, the first polymer will tend to form a laminate with high peel strength. The first polymer preferably has a number-average molecular weight of 50,000 or less, more preferably 40,000 or less, even more preferably 30,000 or less. With an excessively high number-average molecular weight, the first polymer will tend to form a laminate with low peel strength. The number-average molecular weight can be measured by the same method as that for the second prepolymer.

The first polymer preferably has a softening point of 90°C or more, more preferably 100°C or more, even more preferably 110°C or more. With a high softening point, the first polymer will tend to form a laminate with high heat resistance and high bonding ability. In an example, the softening point of the first polymer has an upper limit of 200°C or less, and in another example, it has an upper limit 160°C or less, although it should have no upper limit. The softening point of the mixture can be measured by the same method as that for the second prepolymer.

The first polymer may exist in the form of a mixture with the second prepolymer. The mixture of the first polymer and the second prepolymer can be obtained through the control of the amount of the monofunctional active hydrogen compound. Specifically, the molar amount M5 of the active hydrogen group in the monofunctional active hydrogen compound and the molar amount M6 of the iso(thio)cyanate group in the second prepolymer may be adjusted such that the ratio M5/M6 is less than 1, so that a mixture of the first polymer and the second prepolymer can be obtained, in which the first polymer is produced by protecting the iso(thio)cyanate group of the second prepolymer with the monofunctional active hydrogen compound. The ratio M5/M6 is preferably 0.75 or more and 0.95 or less.

The mixture preferably has a number-average molecular weight of 5,000 or more, more preferably 10,000 or more, even more preferably 13,000 or more. With a high number-average molecular weight, the mixture will tend to form a laminate with high peel strength. The mixture preferably has a number-average molecular weight of 50,000 or less, more preferably 40,000 or less, even more preferably 30,000 or less. With an excessively high number-average molecular weight, the mixture will tend to form a laminate with low peel strength. The number-average molecular weight can be measured by the same method as that for the second prepolymer.

The mixture preferably has a softening point of 90°C or more, more preferably 100°C or more, even more preferably 110°C or more. With a high softening point, the mixture will tend to form a laminate with high heat resistance and high bonding ability. In an example, the softening point of the mixture has an upper limit of 200°C or less, and in another example, it has an upper limit of 160°C or less, although it should have no upper limit. The softening point of the mixture can be measured by the same method as that for the second prepolymer.

The content of the first polymer in the solids of the adhesive composition is, for example, 75 mass% or more and 95 mass% or less.

The mixture of the first polymer and the second prepolymer may include a fourth prepolymer. The fourth prepolymer is a compound derived from the second prepolymer by protecting some of the iso(thio)cyanate groups of the second prepolymer with the monofunctional active hydrogen compound with the remaining iso(thio)cyanate groups being unprotected. The fourth prepolymer may have one iso(thio)cyanate group and one monofunctional active hydrogen compound-derived protecting group. The fourth prepolymer has iso(thio)cyanate groups and thus can form a laminate with high bonding ability like the second prepolymer.

The content of the first polymer in the mixture of the first polymer and the second and fourth prepolymers is 1 mass% or more and 40 mass% or less in an example, and 10 mass% or more and 30 mass% or less in another example. The content of the second prepolymer in the mixture is 1 mass% or more and 40 mass% or less in an example, and 10 mass% or more and 30 mass% or less in another example. The content of the fourth prepolymer in the mixture is 1 mass% or more and 80 mass% or less in an example, and 40 mass% or more and 80 mass% or less in another example.

The adhesive layer may be a product obtained by curing an adhesive composition including the first polymer, the second prepolymer, and the fourth prepolymer or a product obtained by curing an adhesive composition including the first polymer and the fourth prepolymer.

### Monofunctional Active Hydrogen Compound

The monofunctional active hydrogen compound has one active hydrogen group. The monofunctional active hydrogen compound reacts with the isothiocyanate group of the second prepolymer to form the first polymer, which prevents further reaction from taking place. The active hydrogen group includes at least one selected from the group consisting of a hydroxyl group, an amino group, a carboxyl group, and a thiol group.

The monofunctional active hydrogen compound include, for example, at least one selected from the group consisting of a monool compound, which has one hydroxyl group, a monoamine compound, which has one amino group, a carboxylic acid having one carboxyl group, and a mono-thiol compound, which has one thiol group. A single monofunctional active hydrogen compound or a mixture of two or more monofunctional active hydrogen compounds may be used.

The monofunctional active hydrogen compound is preferably a monoamine compound. The monoamine compound can form a (thio)urea bond-containing first polymer.

The monofunctional active hydrogen compound preferably includes an amine having a 2,2,6,6-pentamethyl-4-piperidyl moiety as represented by Formula (3) below. The 2,2,6,6-pentamethyl-4-piperidyl moiety-containing amine can function as a hindered amine and thus can form a laminate with high light stability.

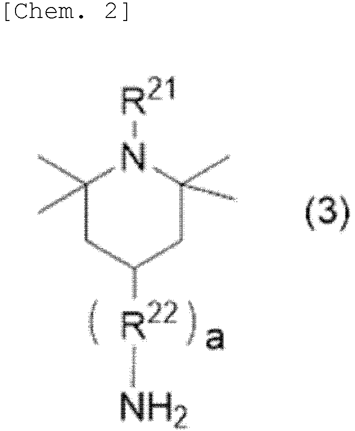

In Formula (3), R²¹ is a hydrogen atom or an alkyl group having 1 to 3 carbon atoms;
R²² is an alkylene group having 1 to 3 carbon atoms; and a is 0 or 1.

The monofunctional active hydrogen compound is preferably 1,2,2,6,6-pentamethyl-4-aminopiperidine, in which R²¹ is a methyl group and a is 0.

The ratio S5/S6 of the mass S5 of the monofunctional active hydrogen compound to the mass S6 of the second prepolymer is preferably 0.001 or more and 0.100 or less. With the ratio S5/S6 in the above range, the monofunctional active hydrogen compound and the second prepolymer can form the first prepolymer having a sufficient amount of isocyanate groups per unit mass. The ratio S5/S6 is preferably 0.010 or more and 0.030 or less.

### Third Prepolymer

The third prepolymer is a compound that has two or more iso(thio)cyanate groups and is obtained by reacting the first polyfunctional active hydrogen compound with the first iso(thio)cyanate compound. In other words, the third prepolymer is a compound similar to the first prepolymer. At high temperature, the third prepolymer can chemically bond with the first prepolymer and the hydroxyl groups on the surfaces of the first and second base materials to form at least one selected from the group consisting of a (thio)urethane resin, a (thio)urea resin, and a (thio)urethane-urea resin.

In a case where the adhesive composition includes the third or fourth combination of the photochromic compound and a polymerizable component including the first polymer and the third prepolymer, the content of the third prepolymer in the solids of the adhesive composition is, for example, 5 mass% or more and 20 mass% or less.

### Additive

The adhesive composition may contain, for example, at least one additive selected from the group consisting of a polymerization catalyst, a polymerization initiator, an antistatic agent, an internal mold release agent, an antioxidant, a light stabilizer, an anti-discoloration agent, a fluorescent dye, a dye, a pigment, a fragrance, a solvent, a leveling agent, and a resin modifier. The adhesive composition preferably contains at least one of an antioxidant or a leveling agent.

Examples of the antioxidant that may be used include 2,6-di-tert-butyl-4-methyl-phenol, IRGANOX 245 manufactured by BASF Japan Ltd. (ethylenebis(oxyethylene)bis[3,5-tert-butyl-4-hydroxy-m-tolyl]propionate]), IRGANOX 1076 manufactured by BASF Japan Ltd. (octadecyl-3-(3,5-di-tert-butyl-4-hydroxyphenyl)propionate), IRGANOX 1010 manufactured by BASF Japan Ltd. (pentaerythritol tetrakis[3-(3,5-di-tert-butyl-4-hydroxyphenyl)propionate]), and IRGANOX 1035, 1075, 104, 3790, 5057, and 565 manufactured by BASF Japan Ltd.

The leveling agent may be a silicone surfactant or a fluorine-containing surfactant. Specifically, the leveling agent may be L-7001, L-7002, L-7604, or FZ-2123 manufactured by Dow Toray Co., Ltd., MEGAFACE F-470, MEGAFACE F-1405, or MEGAFACE F-479 manufactured by DIC Corporation, or Fluorad FC-430 manufactured by 3M Japan Co., Ltd.

The light stabilizer may be a commercially available product and is preferably a hindered amine compound having a 2,2,6,6-tetramethyl-4-piperidyl skeleton. Examples include bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidyl) sebacate, 1-[2-{3-(3,5-di-tert-butyl-4-hydroxyphenyl)propionyloxy}ethyl]-4-{3-(3,5-di-tert-butyl-4-hydroxyphenyl)propionyloxy}-2,2,6,6-tetramethylpiperidine, 4-benzoyloxy-2,2,6,6-tetramethylpiperidine, methyl (1,2,2,6,6-pentamethyl-4-piperidyl)sebacate, 1,2,2,6,6-pentamethyl-4-piperidinyl methacrylate, 2-[[3,5-bis(1,1-dimethylethyl)-4-hydroxyphenyl]methyl]-2-butylpropanedioic acid [1,2,2,6,6-pentamethyl-4-piperidinyl], poly[{6-(1,1,3,3-tetramethylbutyl)amino-1,3,5-triazin-2,4-diyl}{ (2,2,6,6-tetramethyl-4-piperidyl)imino}hexamethylene{ (2,2,6,6-tetramethyl-4-piperidyl)imino}],and 1,2,2,6,6-pentamethyl-4-piperidyl methacrylate. Examples of product names include ADEKA STAB^{®} LA series (e.g., LA-52, LA-57, LA-63P, LA-68, LA-72, LA-77Y, LA-81, LA-82) manufactured by ADEKA Corporation, TINUVIN^{®} series (e.g., TINUVIN 123, TINUVIN 171, TINUVIN 249, TINUVIN 292, TINUVIN 765, TINUVIN 622SF) manufactured by BASF Japan Ltd., and Chimassorb^{®} series (e.g., Chimassorb 2020FDL, Chimassorb 944FDL) manufactured by BASF Japan Ltd.

The content of the additive in the solids of the adhesive composition is, for example, 0.1 mass% or more and 1 mass% or less.

### Organic Solvent

The adhesive composition may contain an organic solvent for adjusting its viscosity. The organic solvent may include at least one selected from the group consisting of tetrahydrofuran, diethyl ketone, tert-butyl alcohol, isopropyl alcohol, propylene glycol monomethyl ether, toluene, ethyl acetate, and cyclohexanone.

The content of the organic solvent in the adhesive composition is, for example, 30 mass% or more and 80 mass% or less.

### Method for Producing the Adhesive Composition

The adhesive composition is produced, for example, by one of first to fourth methods described below.

A first method for producing the adhesive composition includes reacting the first polyfunctional active hydrogen compound with the first iso(thio)cyanate compound to form the first prepolymer; reacting the first prepolymer with the second polyfunctional active hydrogen compound to form the second prepolymer; and mixing the second prepolymer with the photochromic compound and any optional additive.

A second method for producing the adhesive composition includes reacting the first polyfunctional active hydrogen compound with the first iso(thio)cyanate compound to form the first prepolymer; reacting the first prepolymer with the second polyfunctional active hydrogen compound to form the second prepolymer; reacting the second prepolymer with the monofunctional active hydrogen compound to form the mixture of the first polymer and the second prepolymer; and mixing the first polymer, the second prepolymer, the photochromic compound, and any optional additive.

A third method for producing the adhesive composition includes reacting the first polyfunctional active hydrogen compound with the first iso(thio)cyanate compound to form the first prepolymer and the third prepolymer; reacting the first prepolymer with the second polyfunctional active hydrogen compound to form the second prepolymer; reacting the second prepolymer with the monofunctional active hydrogen compound to form the first polymer; and mixing the first polymer, the third prepolymer, the photochromic compound, and any optional additive.

A fourth method for producing the adhesive composition includes reacting the first polyfunctional active hydrogen compound with the first iso(thio)cyanate compound to form the first prepolymer; reacting the first prepolymer with the second polyfunctional active hydrogen compound to form the second prepolymer; reacting the second prepolymer with the monofunctional active hydrogen compound to form the mixture of the first polymer, the second prepolymer, and the fourth prepolymer; and mixing the first polymer, the second prepolymer, the fourth prepolymer, the photochromic compound, and any optional additive.

The reaction of the first polyfunctional active hydrogen compound with the first iso(thio)cyanate compound is preferably carried out in the presence of an organic solvent. The organic solvent may be any of those listed above. The reaction is preferably carried out in a nitrogen atmosphere. The reaction is carried out, for example, at a reaction temperature of 60°C or more and 150°C or less for a period of 3 hours or more and 10 hours or less. The reaction is preferably carried out until the endpoint is reached, which is determined by back titration of isocyanate groups.

The reaction of the first prepolymer with the second polyfunctional active hydrogen compound is preferably carried out in the presence of an organic solvent. The organic solvent may be any of those listed above. The reaction is preferably carried out in a nitrogen atmosphere. The reaction is carried out, for example, at a reaction temperature of 10°C or more and 30°C or less for a period of 0.1 hours or more and 5 hours or less.

The reaction of the second prepolymer with the monofunctional active hydrogen compound is preferably carried out in the presence of an organic solvent. The organic solvent may be any of those listed above. The reaction is preferably carried out in a nitrogen atmosphere. The reaction is carried out, for example, at a reaction temperature of -10°C or more and 10°C or less for a period of 0.1 hours or more and 5 hours or less.

### Coat Layer

The coat layer covers at least a part of the surface of at least one of the first or second base material. The coat layer preferably covers the surfaces of both the first and second base materials. The coat layer preferably covers the entire surfaces of the first and second base materials. The ability of the coat layer to bond to an optical element base material and the shape stability of the laminate tend to increase as the area covered by the coat layer on the surfaces of the first and second base materials increases.

The coat layer typically has a thickness of 5 µm or more. The ability of the coat layer to bond to an optical element base material and the shape stability of the laminate tend to increase as the thickness of the coat layer increases. The coat layer preferably has a thickness of 10 µm or more, more preferably 20 µm or more, even more preferably 25 µm or more. On the other hand, with an excessively large thickness, the coat layer will tend to give a degraded appearance to the laminate. The coat layer preferably has a thickness of 100 µm or less, more preferably 75 µm or less, even more preferably 50 µm or less.

The coat layer includes at least one resin selected from the group consisting of an epoxy resin, a urethane resin, and an acrylic resin. The coat layer preferably includes an epoxy resin. The coat layer including an epoxy resin tends to have a good appearance and a higher ability to bond an optical element base material. The type of the resin in the coat layer can be confirmed by gas chromatography or Fourier transform infrared spectroscopy (FT-IR) analysis.

The coat layer preferably has a surface having at least one functional group selected from the group consisting of an acryloyl group, a methacryloyl group, and a vinyl group. The coat layer having such a functional group-containing surface tends to have an improved ability to bond to an optical element base material.

The presence of the functional group on the surface of the coat layer can be confirmed by Fourier transform infrared spectroscopy (FT-IR) analysis. Specifically, the surface having acryloyl, methacryloyl, or vinyl groups shows an IR spectrum with a peak in the range of 1,600 cm⁻¹ or more and 1,680 cm⁻¹ or less or in the range of 790 cm⁻¹ or more and 1,000 cm⁻¹ or less.

The coat layer can be formed by a process that includes applying the coat layer-forming composition (described below) to the surface of at least one of the first or second base material; and curing the composition.

### Coat Layer-Forming Composition

The coat layer-forming composition may include at least one resin selected from the group consisting of an epoxy resin, a urethane resin, and an acrylic resin; and an organic solvent that dissolves or disperses the resin.

The organic solvent is, for example, at least one selected from the group consisting of methyl ethyl ketone, toluene, methanol, ethanol, normal propanol, isopropanol, acetone, phenol, diethyl ketone, and xylene.

The content of the resin in the coat layer-forming composition is typically 10 mass% or more and 50 mass% or less, preferably 20 mass% or more and 30 mass% or less.

The coat layer-forming composition may further include a first compound having at least one polymerizable functional group selected from the group consisting of an acryloyl group, a methacryloyl group, a vinyl group, and an allyl group. The composition including such a first compound can form a coat layer having a surface containing such a functional group.

The first compound having a (meth)acryloyl group is, for example, a (meth)acrylate having one or more (meth)acryloyl groups. The first compound may be an acrylate or a methacrylate, or in the form of a mixture of them. The first compound preferably has a methacryloyl group. The (meth)acrylate preferably further has at least one functional group selected from the group consisting of an epoxy group, an oxetanyl group, an isocyanate group (-N=C=O), an isothiocyanate group (-N=C=S), an amino group, a hydroxyl group, and a carboxylic acid group. A monofunctional (meth)acrylate having such a functional group will tend to form a coat layer having a higher bonding ability.

Examples of the (meth)acrylate include methacrylic acid, acrylic acid, methoxy polyethylene glycol methacrylate, methoxy polyethylene glycol methacrylate, methoxy polyethylene glycol acrylate, methoxy polyethylene glycol acrylate, stearyl methacrylate, lauryl methacrylate, methyl acrylate, ethyl acrylate, butyl acrylate, octyl acrylate, lauryl acrylate, γ-methacryloxypropyltrimethoxysilane, γ-methacryloxypropylmethyldimethoxysilane, 3,4-epoxycyclohexylmethyl methacrylate, 3,4-epoxycyclohexylmethyl acrylate, and other compounds including an epoxy group-containing compound represented by Formula (11) below.

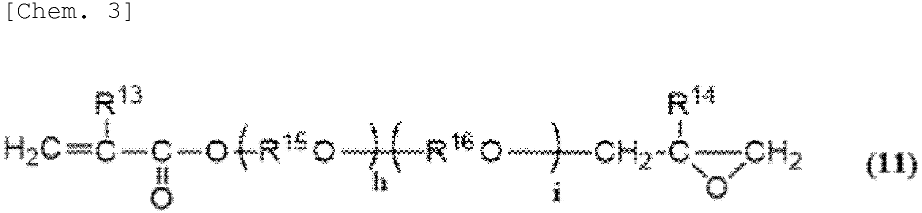

In Formula (11), R¹³ and R¹⁴ are each a hydrogen atom or a methyl group.

R¹⁵ and R¹⁶ are each a group represented by Formula (12) below or an alkylene group having 1 to 4 carbon atoms and optionally substituted with a hydroxy group.

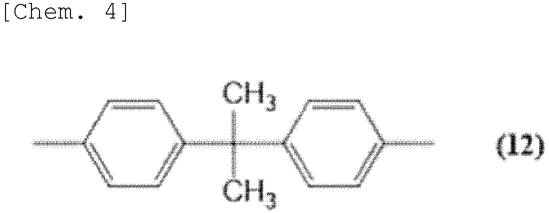

In Formula (11), h and i are each 0 to 20 on average.

The alkylene group for R¹⁵ and R¹⁶ is, for example, methylene, ethylene, propylene, butylene, trimethylene, or tetramethylene. In some cases, the compound of Formula (11) is obtained in the form of a mixture of molecules with different molecular weights. Therefore, h and i each represent an average value.

Examples of the compound of Formula (11) include glycidyl methacrylate, glycidyloxymethyl methacrylate, 2-glycidyloxyethyl methacrylate, 3-glycidyloxypropyl methacrylate, 4-glycidyloxybutyl methacrylate, polyethylene glycol glycidyl methacrylate with an average molecular weight of 406, polyethylene glycol glycidyl methacrylate with an average molecular weight of 538 , polyethylene glycol glycidyl methacrylate with an average molecular weight of 1022, polypropylene glycol glycidyl methacrylate with an average molecular weight of 664, bisphenol A-monoglycidyl ether-methacrylate, 3-(glycidyl-2-oxyethoxy)-2-hydroxypropyl methacrylate, glycidyl acrylate, glycidyloxymethyl acrylate, 2-glycidyloxyethyl acrylate, 3-glycidyloxypropyl acrylate, 4-glycidyloxybutyl acrylate, polyethylene glycol glycidyl acrylate with an average molecular weight of 406, polyethylene glycol glycidyl acrylate with an average molecular weight of 538, polyethylene glycol glycidyl acrylate with an average molecular weight of 1022, 3-(glycidyloxy-1-isopropyloxy)-2-hydroxypropyl acrylate, and 3-(glycidyloxy-2-hydroxypropyloxy)-2-hydroxypropyl acrylate.

The (meth)acrylates may be at least one selected from the group consisting of glycidyl methacrylate, glycidyloxymethyl methacrylate, 2-glycidyloxyethyl methacrylate, 3-glycidyloxypropyl methacrylate, and glycidyl acrylate.

The first compound having a vinyl group or an allyl group is, for example, a compound having one or more vinyl groups and/or one or more allyl groups. Such a compound preferably further has at least one functional group selected from the group consisting of an epoxy group, an oxetanyl group, an isocyanate group (-N=C=O), an isothiocyanate group (-N=C=S), an amino group, a hydroxyl group, and a carboxylic acid group. The compound having such a functional group will tend to form a coat layer with a higher bonding ability.

Examples of the first compound having a vinyl group or an allyl group include methyl vinyl ketone, ethyl vinyl ketone, ethyl vinyl ether, styrene, vinyl cyclohexane, butadiene, 1,4-pentadiene, divinyl sulfide, divinyl sulfone, 1,2-divinylbenzene, 1,3-divinyl-1,1,3,3-tetramethylpropanedisiloxane, diethylene glycol divinyl ether, divinyl adipate, divinyl sebacate, ethylene glycol divinyl ether, divinyl sulfoxide, divinyl persulfide, dimethyl divinyl silane, 1,2,4-trivinylcyclohexane, methyl trimethyl silane, N-vinylpyrrolidone, α-methylstyrene and α-methylstyrene dimer, (vinyloxy)methanol glycidyl ether, (vinyloxy)ethanol glycidyl ether, (vinyloxy)propanol glycidyl ether, (vinyloxy)butanol glycidyl ether, (vinyloxy)pentanol glycidyl ether, (vinyloxy)hexanol glycidyl ether, (vinyloxy)cyclohexanol glycidyl ether, (vinyloxy)cyclohexylmethanol glycidyl ether, (vinyloxymethyl)cyclohexanol glycidyl ether, (vinyloxymethyl)cyclohexylmethanol glycidyl ether, (vinyloxyethyl)cyclohexanol glycidyl ether, (vinyloxyethyl)cyclohexylmethanol glycidyl ether, (vinyloxyethyl)cyclohexylethanol glycidyl ether, allyl glycidyl ether, vinyl glycidyl ether, o-vinylbenzyl glycidyl ether, m-vinylbenzyl glycidyl ether, p-vinylbenzyl glycidyl ether, 2-methyl-2-vinyloxirane, 3,4-epoxy-1-butene, 1,2-epoxy-5-hexene, 1,2-epoxy-9-decene, 1,2-epoxy-4-vinylcyclohexane, and 4,4'-(propane-2,2-diyl)bis(2-allylphenol).

The first compound preferably includes at least one selected from the group consisting of methacrylic acid, acrylic acid, glycidyl methacrylate (GMA), glycidyloxymethyl methacrylate, 2-glycidyloxyethyl methacrylate, 3-glycidyloxypropyl methacrylate, glycidyl acrylate, allyl glycidyl ether, vinyl glycidyl ether, and 1,2-epoxy-4-vinylcyclohexane. In particular, the coat layer-forming composition preferably includes a glycidyl methacrylate in addition to the epoxy resin. Such a composition can form a coat layer with a higher bonding ability.

The content of the first compound in the coat layer-forming composition is typically 0.05 mass% or more and 5 mass% or less, preferably 0.1 mass% or more and 1 mass% or less. The content of the first compound may be 1 mass% or more and 20 mass% or less, 3 mass% or more and 15 mass% or less, or 5 mass% or more and 10 mass% or less. The higher the content of the first compound, the higher the bonding ability of the coat layer tends to be. The lower the content of the first compound, the better the appearance of the laminate tends to be.

The coat layer-forming composition may include a commercially available adhesive or surface treatment agent. Examples of the commercially available adhesive that may be used include ARON MIGHTY^{®} series manufactured by Toagosei Co., Ltd.

### Support

According to an embodiment, the laminate may further include a support. The support may be located between the adhesive layer and the first or second base material or may be located between the first or second base material and the coat layer. The support can further enhance the shape stability of the laminate. The support may be colorless and transparent, white and transparent, or colored and transparent.

The support preferably includes at least one resin selected from the group consisting of polyethylene terephthalate, triacetyl cellulose, polyamide, polycarbonate sheet, cellulose acetate butyrate, and (meth)acrylic resin.

The support preferably has a thickness of 50 µm or more, preferably 100 µm or more, more preferably 200 µm or more. The thicker the support, the greater the strength of the laminate tends to be. In an example, the thickness of the support has an upper limit of 1,000 µm or less, and in another example, it has an upper limit of 500 µm or less, although it should have no upper limit.

### Production Method

A method for producing the laminate includes applying the coat layer-forming composition (described above) to one main surface of at least one of the first or second base material; curing the film of the composition to form a coat layer; applying the adhesive composition (described above) to the other main surface of at least one of the first or second base material with the coat layer thereon or to a main surface of at least one of the first or second base material with no coat layer thereon to form a coating film; and placing the second base material on the coating film.

The method for producing the laminate will be described in detail below.

First, the first and second base materials are provided. The first and second base materials may be commercially available polyvinyl alcohol resin unstretched sheets or may be products obtained by subjecting such sheets to stretching and dyeing. The first and second base materials may also have undergone surface treatment, such as etching, alkaline treatment, or corona treatment.

The coat layer-forming composition is then applied to the main surface of one of the first and second base materials using a bar coater, for example, to form a coating film. The coating film is dried, for example, at a temperature of 40°C or more and 70°C or less for a period of 1 minute or more and 1 hour or less. The coating film may be formed on only one of the first and second base materials. After the drying, the coating film is cured by thermal polymerization to form a coat layer. The thermal polymerization may be carried out either before or after the adhesive composition is applied to the other main surface of the first base material where the coat layer is not provided. The thermal polymerization to form the coat layer may be carried out simultaneously with the heat treatment described later. The thermal polymerization is carried out, for example, under conditions including a temperature of 40°C or more and 160°C or less and a period of 1 minute or more and 10 hours or less. At an excessively high heating temperature, the first and second base materials may shrink.

The adhesive composition is then applied to the other main surface of the first base material, where the coat layer is not provided, using a bar coater, for example, to form a coating film. The coating film is dried, for example, at a temperature of 60°C or more and 150°C or less for a period of 1 minute or more and 1 hour or less. After the drying, the second base material is placed on the first base material such that the main surface of the second base material with no coat layer thereon is disposed to face and brought into contact with the coating film, and then the first and second base materials are bonded together using a lamination roller, for example, to form a structure. Alternatively, the adhesive composition may be applied to a resin film, such as a polyethylene terephthalate film, and the resulting coating may be cured to form an adhesive layer-carrying film. The adhesive layer may then be removed from the adhesive layer-carrying film and then sandwiched between the first and second base materials to form a structure.

The resulting structure is then subjected to degassing. During the degassing, the structure is allowed to stand, for example, under a vacuum of 500 Pa at a temperature of 40°C or more and 80°C or less for a period of 5 hours or more and 20 hours or less. Alternatively, the degassing may be carried out under a vacuum of 15 Torr or less at a temperature in the range of 30°C or more and 60°C or less. The degassed structure is subjected to heat treatment.

Alternatively, the degassing may be omitted. The non-degassed structure may be subjected to heat treatment. Instead of the degassing, humidification treatment may also be carried out. The humidification treatment is carried out, for example, in an environment at a temperature of 60°C or more and 100°C or less and a humidity of 40%RH or more and 95%RH or less for a period of 0.1 hours or more and 10 hours or less. The humidified structure is subjected to heat treatment.

During the heat treatment, for example, the structure is heated at a temperature of 60°C or more and 150°C or less for a period of 0.5 hours or more and 10 hours or less. In a case where the adhesive composition includes the first polymer and the second prepolymer or the third polymer, the heat treatment may produce a composite material having iso(thio)cyanate groups to form cross-linkage between the first and second base materials. After the heat treatment, the structure may be allowed to stand at room temperature for one week or more.

### Optical Component

According to an embodiment, the optical component includes the laminate according to an embodiment. According to an embodiment, the optical component may include the laminate according to an embodiment; and an optical element base material that covers at least a part of the coat layer. Examples of the optical component include binder sheets, lenses, spectacles, windowpanes for houses and automobiles, liquid crystal display components, sun visors, and timepiece components. Lenses include semi-finished lenses and finished lenses.

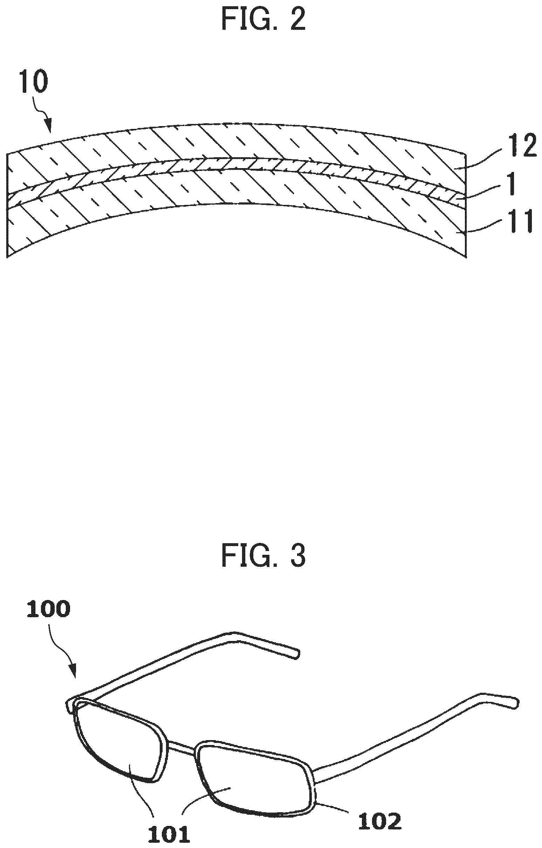

FIG. 2 is a schematic cross-sectional view of an example of an optical component according to an embodiment. As shown in FIG. 2, the optical component 10 includes a first optical element base material 11, a second optical element base material 12, and the laminate 1 provided between the first and second optical element base materials 11 and 12. The optical component 10 has a convex-concave lens shape. The laminate 1 has curved surfaces that define the lens shape. The first optical element base material 11 is located on the concave side, and the second optical element base material 12 is located on the convex side. The first optical element base material 11 covers the entire surface of the first coat layer (not shown) of the laminate 1. The second optical element base material 12 covers the entire surface of the second coat layer (not shown) of the laminate 1. The side surfaces of the laminate 1 are not covered by the first and second optical element base materials. Alternatively, the side surfaces of the laminate 1 may be covered by the first and second optical element base materials.

FIG. 3 is a schematic perspective view of an example of spectacles according to an embodiment. As shown in FIG. 3, the spectacles 100 include lenses 101 and a frame 102 that supports the lenses 101. The lenses 101 each include the optical component according to an embodiment.

### Optical Element Base Material

The optical element base material may include a resin. The resin may include at least one selected from the group consisting of a polyester resin, a polyamide resin, an allyl resin, an acrylic resin, a methacrylic resin, a polyurethane resin, a poly(urethane-urea) resin, a polythiourethane resin, a poly(thiourethane-urea) resin, a polythioepoxy resin, and a polycarbonate resin.

The optical element base material preferably includes an allyl resin. The allyl resin tends to have a high ability to bond to the coat layer of the laminate.

### Curable Composition for Forming Optical Element Base Material

A curable composition for an allyl resin includes an allyl monomer having an allyl group; and a polymerization initiator. The allyl monomer includes at least one selected from the group consisting of diethylene glycol bisallyl carbonate, diallyl isophthalate, and diallyl terephthalate. The polymerization initiator includes, for example, diisopropyl peroxycarbonate.

A curable composition for a (meth)acrylic resin includes a (meth)acrylic monomer having a (meth)acrylate group; and a polymerization initiator.

A curable composition for a urethane-urea resin includes a prepolymer of a polyisocyanate compound and a polyol compound; and a diamine compound. The polyisocyanate compound, the polyol compound, and the diamine compound may each be any of those listed above for the adhesive composition.

A curable composition for a thiourethane resin includes a polyisocyanate compound, a polythiol compound, and a polymerization catalyst. The polyisocyanate compound may be any of those listed above for the adhesive composition.

A curable composition for a thioepoxy resin includes a thioepoxy group-containing monomer, a curing agent, and a polymerization catalyst.

### Method for Producing the Optical Component

The optical component according to an embodiment is produced, for example, by the method described below. First, molds and a gasket are provided. The molds include upper and lower molds. The upper and lower molds are combined to form an inner hollow space. The gasket is provided at the interface between the upper and lower molds. The gasket has an inner cutout for fixing the laminate. Instead of the cutout, the gasket may have an inner protrusion or recess. The molds and the gasket are, for example, those known in the art for molding a plastic lens.

The laminate may have undergone shaping, such as curving to conform to the mold shape. Specifically, the laminate is placed in a die of a curved surface forming device. The die has a lens shape, such as a hemispherical shape. The die has a hole through its bottom. The hole is connected via piping to a pressure regulator, such as a vacuum pump. The pressure regulator is driven to reduce the pressure in the space between the die and the laminate. As a result, the second base material of the laminate is deformed so as to adhere to the bottom surface of the die. During this process, the environmental temperature may be set at 70°C or more and 160°C or less to make the laminate more deformable. After a certain period of time has elapsed, the operation of the pressure regulator is stopped, and the deformed laminate is removed from the die. After the removal, the laminate is cooled, for example, at a temperature of 0°C or more and 40°C or less. In this way, the resulting laminate has a curved surface.

The edge of the laminate is then fixed by the insertion of the laminate into the cutout of the gasket. The gasket is placed at the interface between the molds. Thus, the laminate is located across the inner hollow space of the molds. The curable composition for forming the optical element base material is then filled into the inner hollow space of the molds. The molds filled with the curable composition are then heat-treated so that the curable composition is cured. During the heat treatment, for example, the temperature is gradually increased from room temperature to the curing temperature, and after the curing temperature is reached, the temperature is held for a certain period of time. The curing temperature is, for example, 60°C or more and 100°C or less. The rate of temperature increase is, for example, 1°C/hour or more and 10°C/hour or less. The holding time at the curing temperature is, for example, 1 hour or more and 30 hours or less.

After the heat treatment is completed, the cured product is removed from the molds. After the removal, the cured product is heated at a temperature in the range of 60°C or more and 150°C or less for a period of 1 hour or more and 10 hours or less. The resulting product includes the laminate and optical element base materials which cover the surfaces of the coat layers on the first and second base material of the laminate.

According to an embodiment, the optical component may be obtained by the method described below. First, some of the curable composition is filled into the lower mold. After the filling, the laminate is placed on the surface of the curable composition. The upper mold is then placed to mate with the lower mold so that a hollow space is formed. The remainder of the curable composition is filled into the hollow space. The molds are then heated in the same way as described above so that a cured product is obtained. The resulting product is an optical component including the laminate; and optical element base materials according to an embodiment which cover the entire main surfaces and side surfaces of the laminate. Alternatively, the optical component according to an embodiment may be obtained by the method described below. First, the laminate is placed along the top surface of a mold. The curable composition is loaded on the surface of the laminate, opposite to its surface in contact with the top surface of the mold, and then heat-treated under the same conditions as shown above so that a first cured product is obtained. The first cured product is placed in a mold. The curable composition is loaded on the uncovered surface of the laminate, opposite to the surface covered by the cured product, and then heat-treated under the same conditions as shown above so that a second cured product is obtained. The resulting product is an optical component including the laminate; and optical element base materials which cover the main surfaces and optionally side surfaces of the laminate.

### EXAMPLES

Hereinafter, the present invention will be described in more detail with reference to some illustrative examples. Such examples are merely for the purpose of illustrating the present invention and not intended to limit the spirit and scope of the present invention.

### Example 1

### Production of First Prepolymer FPP1

A mixture was obtained by adding 100 g of a first isocyanate compound FI1, 315 g of a first polyfunctional active hydrogen compound FA1, and 40 g of an organic solvent OS1 to a 2 L reaction vessel. The first isocyanate compound FI1 was isophorone diisocyanate. The first polyfunctional active hydrogen compound FA1 was a polycarbonate diol with a number-average molecular weight of 1,000. The organic solvent OS1 was diethyl ketone. In a nitrogen atmosphere, the mixture was stirred at 150 rpm and 100°C for 5 hours to form a reaction solution containing a first prepolymer. Hereinafter, the first prepolymer is also referred to as the first prepolymer FPP1. The endpoint of the reaction was determined by back titration of isocyanate groups.

### Production of Second Prepolymer SPP1

After 560 g of the organic solvent OS1 and 150 g of an organic solvent OS2 were added at 10°C to the reaction solution containing the first prepolymer FPP1, the solution temperature was held at 15°C. The organic solvent OS2 was tert-butyl alcohol. To the reaction solution was added dropwise 21.3 g of a second polyfunctional active hydrogen compound SA1, and reacted at 15°C for 1 hour to form a reaction solution containing a second prepolymer. The second polyfunctional active hydrogen compound SA1 was bis-(4-aminocyclohexyl) methane. Hereinafter, the second prepolymer is also referred to as the second prepolymer SPP1. The concentration of solids in the reaction solution containing the second prepolymer SPP1 was 37.6%.

The number-average molecular weight of the second prepolymer SPP1 was measured to be 13,000. The softening point of the second prepolymer SPP1 was measured to be 98°C.

### Preparation of Adhesive Composition AC1

An adhesive composition was obtained by mixing 100 g of the reaction solution containing the second prepolymer SPP1, 1.02 g of a photochromic compound PC1, 0.34 g of ethylenebis(oxyethylene)bis[3-(5-tert-butyl-4-hydroxy-m-tolyl)propionate], and 0.05 g of DOW CORNING TORAY L-7001 and stirring them at room temperature. Hereinafter, the resulting adhesive composition is also referred to as the adhesive composition AC1.

PC1: The compound represented by the following formula.

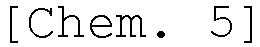

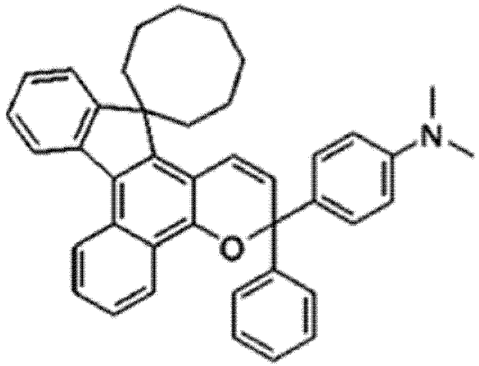

### Preparation of Laminate OL1

First, 75 µm-thick unstretched polyvinyl alcohol films were provided as first and second base materials. Hereinafter, the films are also referred to as the polyvinyl alcohol films PVF1.

A coat layer-forming composition was applied using a bar coater to one main surface of the polyvinyl alcohol film PVF1 to form a coating film. The coating film was dried at 60°C for 5 minutes. In this way, the first base material was provided with the first coating film on its one main surface. In the same way, the second base material was provided with the second coating film on its one main surface. The first and second coating films each had a thickness of 10 µm. The coat layer-forming composition was a solution of an epoxy resin in a mixed solvent of toluene and methanol. Hereinafter, the coat layer-forming composition is also referred to as the coat layer-forming composition CF1.

The adhesive composition AC1 was applied using a bar coater to a PET (polyethylene terephthalate) film (Purex film (with silicone coating) manufactured by Teijin DuPont Film Japan Limited) to form a third coating film. After the third coating film was dried at 100°C for 5 minutes, the PET film was removed so that an about 30 µm-thick photochromic adhesive sheet was obtained. The resulting photochromic adhesive sheet was sandwiched between the other main surface of the first base material (opposite to its surface with the first coating film thereon) and the other main surface of the second base material (opposite to its surface with the second coating film thereon), so that the first and second base materials were bonded together to form a structure. The resulting structure was a rectangular strip. One longitudinal end of the structure was left uncoated with the adhesive composition.

The structure was heated at 100°C for 6 hours while being held on all sides so that it was prevented from shrinking. As a result, the first and second coating films and the photochromic adhesive sheet were cured. Hereinafter, the resulting laminate is also referred to as the laminate OL1.

### Preparation of Curable Composition CC1

A curable composition was obtained by mixing 97 parts by mass of diethylene glycol bisallyl carbonate and 3 parts by mass of diisopropyl peroxydicarbonate. Hereinafter, the curable composition is also referred to as the curable composition CC1.

### Curving the Surface of Laminate OL1

First, the laminate OL1 was vacuum-dried under conditions at 80°C and 13 Torr for 15 hours. After the vacuum drying, the laminate OL1 was placed in a curved surface-forming device and subjected to curved surface forming. Specifically, the laminate was die-cut into a 10 cm square piece, which was allowed to stand in an environment at 45°C and 90%RH for 30 minutes and then shaped to have a spherical surface using a 6-base curve convex die of 83 mm in diameter. The shaped sheet was dried to give a 6-base curve sheet of 83 mm in diameter.

### Production of Lens LS1

The laminate OL1 with the curved surface was placed in the inner cut-out of a gasket. The gasket was then placed in a glass mold so that the laminate OL1 was positioned in the hollow space of the glass mold. The glass mold was designed to provide a lens power D of 6.00, a lens diameter of 83 mm, and a lens thickness of 7.5 mm. The curable composition CC1 was injected into the hollow space of the glass mold. After the injection of the curable composition CC1, the glass mold was gradually heated from 35°C to 85°C over a period of 17 hours using an air furnace. After the heating, the cured product was removed from the gasket and the glass mold, and then placed in an oven and heated at 90°C for 3 hours. After the heating, the circumference of the cured product was polished using a lens edger so that a laminate of 70 mm in diameter was obtained as shown in FIG. 2. This process was repeated to form three lenses in total. Hereinafter, the lenses are also referred to as the lenses LS1.

### Example 2

Lenses were obtained using the same method as in Example 1, except that the thickness of the coat layer was changed to 25 µm.

### Example 3

Lenses were obtained using the same method as in Example 1, except that a coat layer-forming composition CF2 was used instead. The coat layer-forming composition CF2 was prepared by mixing the coat layer-forming composition CF1 with glycidyl methacrylate (GMA). The content of GMA in the coat layer-forming composition CF2 was 2 mass%.

### Examples 4 to 6

Lenses were obtained using the same method as in Example 3, except that the thickness of the coat layer was changed to 25 µm, 50 µm, and 75 µm, respectively.

### Example 7

Lenses were obtained using the same method as in Example 2, except that a coat layer-forming composition CF3 was used instead. The coat layer-forming composition CF3 was a solution of a urethane resin in methyl ethyl ketone.

### Example 8

Lenses were obtained using the same method as in Example 5, except that a coat layer-forming composition CF4 was used instead. The coat layer-forming composition CF4 was prepared by mixing the coat layer-forming composition CF1 with allyl glycidyl ether. The content of allyl glycidyl ether in the coat layer-forming composition CF4 was 10 mass%.

### Example 9

Lenses were obtained using the same method as in Example 5, except that a coat layer forming composition CF5 was used instead. The coat layer-forming composition CF5 was prepared by mixing the coat layer-forming composition CF1 with 1,2-epoxy-4-vinylcyclohexane. The content of 1,2-epoxy-4-vinylcyclohexane in the coat layer-forming composition CF5 was 5 mass%.

### Example 10

Lenses were obtained using the same method as in Example 8, except that a 60 µm-thick triacetyl cellulose film (hereinafter also referred to as the film TAC1) was provided instead of PVA1 and that the laminate was obtained by a process including degassing the resulting structure under conditions at 40°C and 13 Torr for 16 hours and then curing the structure by heating at 100°C for 6 hours instead of the process including heating the resulting structure at 100°C for 6 hours while holding the structure on all sides to prevent shrinkage so that the first and second coating films and the photochromic adhesive sheet were cured.

### Example 11

Lenses were obtained using the same method as in Example 10, except that the coat layer-forming composition CF5 was used instead.

### Example 12

Lenses were obtained using the same method as in Example 10, except that a coat layer-forming composition CF6 was used instead. The coat layer-forming composition CF6 was prepared by mixing the coat layer-forming composition CF1 with methacrylic acid. The content of methacrylic acid in the coat layer-forming composition CF6 was 20 mass%.

### Comparative Example 1

Lenses were obtained using the same method as in Example 2, except that the process of forming the coat layer was omitted.

### Comparative Example 2

Lenses were obtained using the same method as in Example 10, except that the process of forming the coat layer was omitted.

### Evaluation Tests

### FT-IR Analysis of the Coat Layer

The functional groups on the surface of the coat layer of the resulting laminate were observed using FT-IR analysis. The results are shown in Table 1.

### Measurement of Photochromic Properties of the Laminate and Lens

The resulting laminate was measured for maximum absorption wavelength, color optical density, and color fading rate. Specifically, first, one base material side of the laminate was irradiated through Aeromas filter (manufactured by Corning Inc.) with a xenon lamp L-2480 (300W) SHL-100 (manufactured by Hamamatsu Photonics K.K.) at a temperature of 23°C for 120 seconds so that the photochromic compound was allowed to develop color. The beam intensity was 2.4 mW/cm² at 365 nm and 24 µW/cm² at 245 nm.

After the color development, the maximum absorption wavelength (λmax) was determined using a spectrophotometer (Instant Multi-Channel Photo Director MCPD1000 manufactured by Otsuka Electronics Co., Ltd.).

The absorbance ε(0) at the maximum absorption wavelength of the laminate was measured under no irradiation with the xenon lamp. The laminate wad then irradiated at the above intensity for 120 seconds with the xenon lamp when the absorbance ε(120) at the maximum absorption wavelength of the laminate was measured. The color optical density was calculated by subtracting the absorbance ε(0) from the absorbance ε(120). The higher the color optical density, the higher the photochromic performance is considered.

The time required for the color optical density to fall to half the initial value was measured and used as the color fading rate (t1/2 (sec)). The shorter the time, the higher the photochromic performance is considered.

The laminates and lenses of the examples and the comparative examples all had a color optical density of 1.1 and a color fading rate of 40 seconds.

Evaluation of Appearance (Visual Appearance) of Laminate The appearance of the laminate was evaluated using the method described below. Specifically, it was visually evaluated whether the laminate was cloudy, and an image obtained by the projection of the lens with the ozone-free xenon arc lamp of LIQCX75 manufactured by Bulbtronics Inc. was visually observed. The evaluation criteria were as shown below. The results are shown in Table 1.
1: No cloudiness was observed in the visual evaluation, and 0 to 2 stripes were observed in the image obtained by the production of the lens with the ozone-free xenon arc lamp.
2: No cloudiness was observed in the visual evaluation, and 3 to 5 stripes were observed in the image obtained by the projection of the lens with the ozone-free xenon arc lamp.
3: No cloudiness was observed in the visual evaluation, and 6 or more stripes were observed in the image obtained by the projection of the lens with the ozone-free xenon arc lamp.
4: Cloudiness was observed in the visual evaluation.

### Evaluation of Shape Stability of Laminate

The laminate was evaluated for shape stability by the method described below. First, the laminate having undergone the surface curving process shown in Example 1 was provided. The laminate was allowed to stand in a thermostatic chamber at a temperature of 25°C and a relative humidity of 60%RH. Every 30 minutes, the laminate was taken out of the thermostatic chamber, attached to a die, and visually checked for whether it changed shape. The time until the laminate became inconsistent with the die and was observed to be deformed was determined. Similar tests were conducted in an environment at a temperature of 40°C and a relative humidity of 35%RH, and in an environment at a temperature of 5°C and a relative humidity of 90%RH. The test results are shown in Table 1.

### Evaluation of Adhesion in the Lens

The adhesion between the laminate and the optical element base material in the resulting lens was evaluated using the method described below. First, whether delamination occurred between the laminate and the optical element base material was observed while a cemented carbide blade scraper was pressed against the interface between them. Next, the lens was boiled in distilled water for a test period, and then whether delamination occurred between the laminate and the optical element base material was observed while a cemented carbide blade scraper was pressed against the interface between them. The evaluation criteria were as shown below. The results are shown in Table 1.
1: Delamination was observed between the laminate and the optical element base material before the boiling test.
2: Delamination was observed between the laminate and the optical element base material after the 3-hour boiling test.
3: No delamination was observed at all between the layers.

### [Table 1]

**Table 1**

| | Base materials | | Coat layer | | | | Laminate | | | | Lens |
|---|---|---|---|---|---|---|---|---|---|---|---|
| | First base material | Second base material | Type | Resin | Surface functional group | Thickness (µm) | Shape stability (hour) | | | Appearance | Adhesion |
| | | | | | | | 25°C 60%RH | 40°C 35RH% | 5°C 90%RH | | |
| Example 1 | PVA1 | PVA1 | CF1 | Epoxy | Absent | 10 | 3.5 | 3 | 4 | 3 | 2 |
| Example 2 | PVA1 | PVA1 | CF1 | Epoxy | Absent | 25 | 3.5 | 3 | 4 | 3 | 2 |
| Example 3 | PVA1 | PVA1 | CF2 | Epoxy | Methacryloyl group | 10 | 3.5 | 3 | 4 | 3 | 3 |
| Example 4 | PVA1 | PVA1 | CF2 | Epoxy | Methacryloyl group | 25 | 6 | 5 | 6.5 | 3 | 3 |
| Example 5 | PVA1 | PVA1 | CF2 | Epoxy | Methacryloyl group | 50 | 7 | 6 | 7 | 2 | 3 |
| Example 6 | PVA1 | PVA1 | CF2 | Epoxy | Methacryloyl group | 75 | 7 | 6 | 7 | 1 | 3 |
| Example 7 | PVA1 | PVA1 | CF3 | Urethane | Absent | 25 | 3.5 | 2.5 | 4 | 4 | 2 |
| Example 8 | PVA1 | PVA1 | CF4 | Epoxy | Vinyl group | 50 | 7 | 6 | 7 | 1 | 3 |
| Example 9 | PVA1 | PVA1 | CF5 | Epoxy | Vinyl group | 50 | 7 | 6 | 7 | 1 | 3 |
| Example 10 | TAC1 | TAC1 | CF4 | Epoxy | Vinyl group | 50 | >24 | >24 | >24 | 1 | 3 |
| Example 11 | TAC1 | TAC1 | CF5 | Epoxy | Vinyl group | 50 | >24 | >24 | >24 | 1 | 3 |
| Example 12 | TAC1 | TAC1 | CF6 | Epoxy | Methacryloyl group | 50 | >24 | >24 | >24 | 2 | 3 |
| Comparative Example 1 | PVA1 | PVA1 | - | - | - | 25 | 2.5 | 2 | 2 | 3 | 1 |
| Comparative Example 2 | TAC1 | TAC1 | - | - | - | 50 | >24 | >24 | >24 | 1 | 1 |

As shown in Table 1, the shape stability of the coat layer-containing laminates of Examples 1 to 12 is higher than that of those of Comparative Examples 1 and 2, and the adhesion in the lenses of Examples 1 to 12 is higher than that in those of Comparative Examples 1 and 2.

Preferred aspects of the present invention will be listed below.
[1] A laminate comprising:
   a first base material and a second base material each comprising a polyvinyl alcohol resin or a cellulose resin;
   an adhesive layer provided between the first base material and the second base material to bond them together; and
   a coat layer that covers at least a part of a surface of at least one of the first base material or the second base material and comprises at least one resin selected from the group consisting of an epoxy resin, a urethane resin, and an acrylic resin.
[2] The laminate according to aspect [1], wherein the coat layer has a thickness of 5 µm or more and 50 µm or less.
[3] The laminate according to aspect [1] or [2], wherein the coat layer comprises an epoxy resin.
[4] The laminate according to any one of aspects [1] to [3], wherein the coat layer has a surface having at least one functional group selected from the group consisting of an acryloyl group, a methacryloyl group, a vinyl group, and an allyl group.
[5] The laminate according to any one of aspects [1] to [4], wherein the coat layer comprises a cured product of a coat layer-forming composition comprising an organic solvent and at least one resin selected from the group consisting of an epoxy resin, a urethane resin, and an acrylic resin.
[6] The laminate according to aspect [5], wherein the coat layer-forming composition further comprises a first compound having at least one polymerizable functional group selected from the group consisting of an acryloyl group, a methacryloyl group, a vinyl group, and an allyl group.
[7] The laminate according to aspect [5] or [6], wherein the first compound further has at least one functional group selected from the group consisting of an epoxy group, an oxetanyl group, an isocyanate group, an isothiocyanate group, an amino group, a hydroxyl group, and a carboxylic acid group.
[8] The laminate according to aspect [6] or [7], wherein the first compound comprises at least one selected from the group consisting of methacrylic acid, acrylic acid, glycidyl methacrylate, glycidyloxymethyl methacrylate, 2-glycidyloxyethyl methacrylate, 3-glycidyloxypropyl methacrylate, glycidyl acrylate, allyl glycidyl ether, vinyl glycidyl ether, and 1,2-epoxy-4-vinylcyclohexane.
[9] The laminate according to any one of aspects [1] to [8], wherein the adhesive layer contains a functional colorant.
[10] The laminate according to any one of aspects [1] to [9], wherein the adhesive layer contains a photochromic compound.
[11] An optical component comprising the laminate according to any one of aspects [1] to [10].
[12] An optical component comprising:
   the laminate according to any one of aspects [1] to [10]; and
   an optical element base material that covers at least a part of the coat layer.
[13] The optical component according to aspect [12], wherein the optical element base material comprises an allyl resin.
[14] A lens comprising the optical component according to any one of aspects [11] to [13].
[15] Spectacles comprising the lens according to aspect [14].

## Claims

1. A laminate comprising:
a first base material and a second base material each comprising a polyvinyl alcohol resin or a cellulose resin;
an adhesive layer provided between the first base material and the second base material to bond them together; and
a coat layer that covers at least a part of a surface of at least one of the first base material or the second base material and comprises at least one resin selected from the group consisting of an epoxy resin, a urethane resin, and an acrylic resin.

2. The laminate according to claim 1, wherein the coat layer has a thickness of 5 µm or more and 50 µm or less.

3. The laminate according to claim 1, wherein the coat layer comprises an epoxy resin.

4. The laminate according to claim 1, wherein the coat layer has a surface having at least one functional group selected from the group consisting of an acryloyl group, a methacryloyl group, a vinyl group, and an allyl group.

5. The laminate according to claim 1, wherein the coat layer comprises a cured product of a coat layer-forming composition comprising an organic solvent and at least one resin selected from the group consisting of an epoxy resin, a urethane resin, and an acrylic resin.

6. The laminate according to claim 5, wherein the coat layer-forming composition further comprises a first compound having at least one polymerizable functional group selected from the group consisting of an acryloyl group, a methacryloyl group, a vinyl group, and an allyl group.

7. The laminate according to claim 6, wherein the first compound further has at least one functional group selected from the group consisting of an epoxy group, an oxetanyl group, an isocyanate group, an isothiocyanate group, an amino group, a hydroxyl group, and a carboxylic acid group.

8. The laminate according to claim 6, wherein the first compound comprises at least one selected from the group consisting of methacrylic acid, acrylic acid, glycidyl methacrylate, glycidyloxymethyl methacrylate, 2-glycidyloxyethyl methacrylate, 3-glycidyloxypropyl methacrylate, glycidyl acrylate, allyl glycidyl ether, vinyl glycidyl ether, and 1,2-epoxy-4-vinylcyclohexane.

9. The laminate according to claim 1, wherein the adhesive layer contains a functional colorant.

10. The laminate according to claim 1, wherein the adhesive layer contains a photochromic compound.

11. An optical component comprising the laminate according to claim 1.

12. An optical component comprising:
the laminate according to claim 1; and
an optical element base material that covers at least a part of the coat layer.

13. The optical component according to claim 12, wherein the optical element base material comprises an allyl resin.

14. A lens comprising the optical component according to claim 11.

15. Spectacles comprising the lens according to claim 14.
